# EUROPÄISCHE PATENTSCHRIFT

(11) **EP 2 920 278 B1**
(45) Veröffentlichungstag und Bekanntmachung des Hinweises auf die Patenterteilung: **26.12.2018**
(21) Anmeldenummer: 13814029.8
(22) Anmeldetag: 11.11.2013
(51) Int. Cl.: C10M 103/06, C01G 39/00, C10M 133/06, C10N 10/02, C10N 10/08, C10N 10/10, C10N 10/12, C10N 30/06, C10N 30/08, C10N 40/20, C10N 40/36

(54) **BESCHICHTUNG FÜR HOCHTEMPERATURANWENDUNGEN MIT TRIBOLOGISCHER BEANSPRUCHUNG**
COATING FOR HIGH TEMPERATURE APPLICATIONS WITH TRIBOLOGICAL STRESS
REVÊTEMENT POUR APPLICATIONS À HAUTE TEMPÉRATURE SOUS CONTRAINTE TRIBOLOGIQUE

(30) Priorität: 13.11.2012 DE 102012022114; 14.12.2012 EP 12008340
(43) Veröffentlichungstag der Anmeldung: 23.09.2015
(73) Patentinhaber: Oerlikon Surface Solutions AG, Pfäffikon, 8808 Pfäffikon SZ (CH)
(72) Erfinder: SOEBIECH, Matthias, Lukas, 88142 Wasserburg (DE); RAMM, Jürgen, CH-7304 Maienfeld (CH)
(74) Vertreter: Troesch Scheidegger Werner AG
(86) Internationale Anmeldenummer: PCT/EP2013/003391
(87) Internationale Veröffentlichungsnummer: WO 2014/075787

(56) Entgegenhaltungen:
- EP-A1- 1 712 654
- WO-A1-2011/095292
- WO-A1-2014/056605
- DE-A1-102010 053 751
- JP-A- 2004 115 833
- US-A- 4 465 604
- SUSZKO T ET AL: "The role of surface oxidation in friction processes on molybdenum nitride thin films", SURFACE AND COATINGS TECHNOLOGY, ELSEVIER, AMSTERDAM, NL, Bd. 194, Nr. 2-3, 1. Mai 2005 (2005-05-01) , Seiten 319-324, XP027609252, ISSN: 0257-8972 [gefunden am 2005-05-01]
- PAPPACENA K E ET AL: "Residual stresses, interfacial adhesion and tribological properties of MoN/Cu composite coatings", WEAR, ELSEVIER SEQUOIA, LAUSANNE, CH, Bd. 278, 3. Januar 2012 (2012-01-03), Seiten 62-70, XP028459859, ISSN: 0043-1648, DOI: 10.1016/J.WEAR.2012.01.007 [gefunden am 2012-01-12]
- OZTURK ET AL: "Comparative tribological behaviors of TiN?, CrN? and MoN?Cu nanocomposite coatings", TRIBOLOGY INTERNATIONAL, BUTTERWORTH SCIENTIFIC LDT, GUILDFORD, GB, Bd. 41, Nr. 1, 18. September 2007 (2007-09-18), Seiten 49-59, XP022257470, ISSN: 0301-679X, DOI: 10.1016/J.TRIBOINT.2007.04.008
- PATRICK RITT ET AL: "Mo Si B based coating for oxidation protection of SiC C composites", SURFACE AND COATINGS TECHNOLOGY, ELSEVIER BV, AMSTERDAM, NL, vol. 206, no. 19, 7 April 2012 (2012-04-07), pages 4166-4172, XP028508703, ISSN: 0257-8972, DOI: 10.1016/J.SURFCOAT.2012.04.016 [retrieved on 2012-04-17]

## Beschreibung

Die vorliegende Erfindung bezieht sich auf Verschleissschutz-Beschichtungen für Komponenten, Bauteile und Werkzeuge welche in der Anwendung hohen Temperaturen ausgesetzt sind. Komponenten, Bauteile und Werkzeuge werden im Folgenden gemeinsam als Substrate bezeichnet.

### Aufgabe der Erfindung

Applikationen bei "hohen" Temperaturen stellen extreme Anforderungen an die Oberflächenfunktionalität von Bauelementen, Komponenten und Werkzeugen im Hinblick auf mechanische, strukturelle und chemische Stabilität dar. Um die langzeitstabile Oberflächenfunktionalität zu gewährleisten und somit die industrielle Prozessproduktivität zu sichern, stellt die vorliegende Erfindung Hartstoffschichtsysteme für Bauelemente, bewegliche Komponenten und Form- und Schneidwerkzeuge zur Verfügung, die in zufriedenstellender Weise den Verschleiss der Komponenten und der Werkzeuge bei verschiedenen industriellen Applikationen mit deutlich erhöhten thermischen Belastungen (d.h. Temperaturen von mehr als 400°C, im folgenden *Hochtemperaturapplikation* genannt) verbessert. Die grundlegenden Eigenschaften dieses hochtemperaturstabilen Hartstoffschichtsystems sind wie folgt: i) Ausreichender Abrasiv-Verschleissschutz, ii) ausreichender Adhäsiv-Verschleissschutz, iii) ausreichende Schichthaftung und iv) ausreichende Temperaturstabilität (Phasenstabilität und Oxidationsbeständigkeit).

### Beschreibung der Erfindung

Der Gegenstand der Erfindung wird in den angefügten Ansprüchen definiert.

Es wird ein Beschichtungssystem vorgeschlagen, welches im Wesentlichen als Basis ein Mehrlagenschichtsystem umfasst. Auf diesem Mehrlagenschichtsystem ist ein Top-Schmierschichtsystem mit mindestens einer Lage vorgesehen. Dieses Top-Schmierschichtsystem schliesst das Beschichtungssystem nach aussen hin ab. Das Top-Schmierschichtsystem enthält als Hauptbestandteil Molybdän und kann je nach vorherrschendem Hochtemperatur-Tribokontakt und der daraus resultierenden mechanischen und chemischen Beanspruchung der Oberfläche, eine angepasste Architektur/Mikrostruktur sowie eine angepasste Zusammensetzung aufweisen.

Im Folgenden werden nähere Ausführungen zur bevorzugten Architektur/Mikrostruktur und Zusammensetzung gegeben. Vereinfachend wird im Folgenden das Top-Schmierschichtsystem auch Top-Schmierschicht genannt.

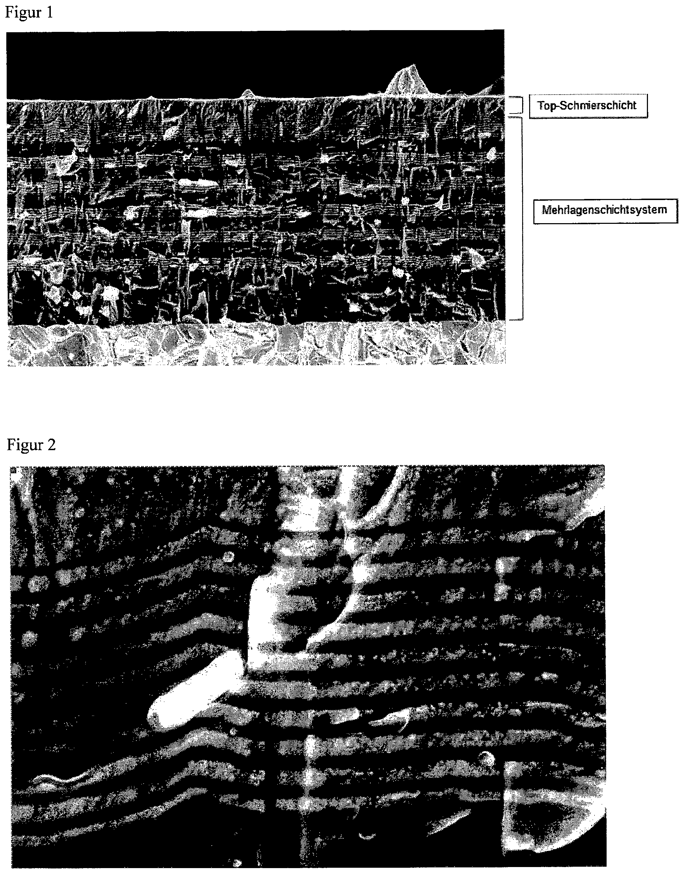

- Figur 1: zeigt eine Erfindungsgemässe Beschichtung
- Figur 2: zeigt einen Ausschnitt einer erfindungsgemässen Beschichung (Nanolagen)

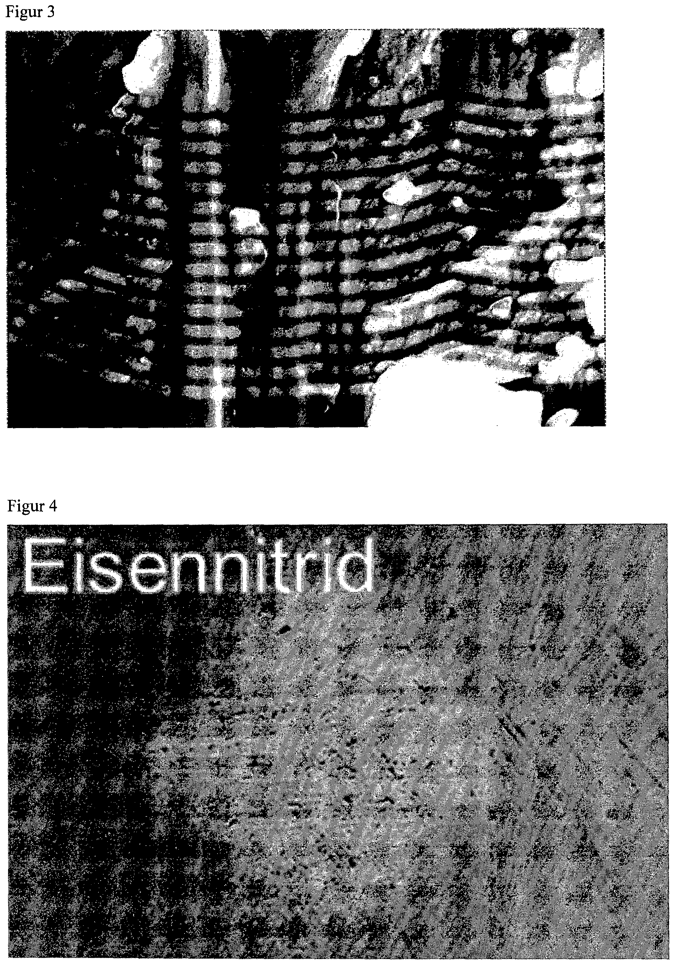

- Figur 3: zeigt einen Ausschnitt einer erfindungsgemässen Beschichung (Nanolagen)
- Figur 4: zeigt Eisennitrid

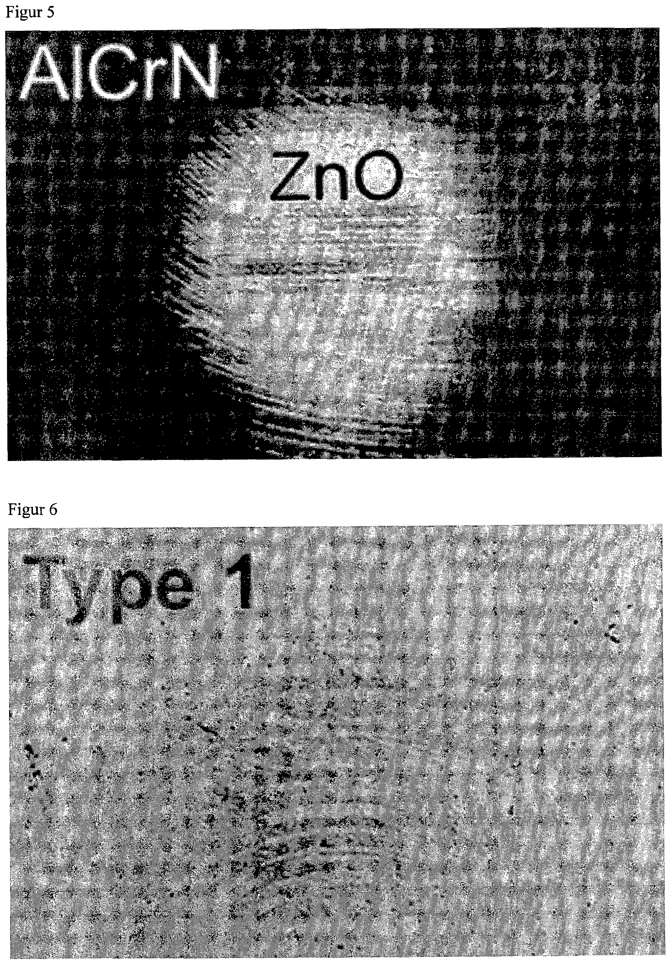

- Figur 5: zeigt AlCrN
- Figur 6: zeigt Type 1

Die Architektur dieser Top-Schmierschicht kann charakterisiert sein durch i) einen Monolayer Aufbau, ii) einen Bilayer Aufbau, iii) einen Multilayer Aufbau oder iv) einen nanolaminierten Aufbau, wobei im Fall ii)-iv) durch den Aufbau die Mikrostruktur oder der Chemismus verändert wird. Gradierungen der Mikrostruktur und/oder der Zusammensetzung sind jedoch in allen Fällen i)-iv) möglich und angebracht, um für die jeweilige Applikation das Schmierverhalten in Abstimmung mit den erforderlichen mechanischen Eigenschaften zu gewährleisten. Grundsätzlich sind in allen Fällen die Schichten von nanoskaliger Natur.

Die chemische Zusammensetzung der Top-Schmierschicht ist im Allgemeinem wie folgt charakterisiert: Moₐ-X_{b}-Y_{c} wobei a, b und c die atomare Konzentration der jeweiligen Bestandteile angibt und a+b+c=1 gilt und Molybdän als dominierendem Bestandteil realisiert ist, d.h. 0≤b<a und 0≤c<a gilt, wobei vorzugsweise b+c>0 ist, mit X als variablem Metall-Bestandteil: B, Si, V, W, Zr, Cu und Ag oder eine Kombination daraus, mit Y als variablem Nichtmetall-Bestandteil: C, O und N oder eine Kombination daraus.

Besonders bevorzugt bei Hochtemperaturapplikationen oberhalb von 500°C sind Top-Schmierschichten mit folgenden Zusammensetzungen:
∘ Mo und/oder Mo-Cu
∘ Mo-N und/oder Mo-Cu-N
∘ Mo-O-N und/oder Mo-Cu-O-N
∘ Mo-Si-B und/oder Mo-Si-B-N
∘ Mo-Si-B-O-N

Bevorzugt enthält die Top-Schmierschicht mindesten 95at% Molybdän. Besonders bevorzugt enthält die Top-Schmierschicht kein Aluminium. Vorzugsweise beträgt die Schichtdicke der Top-Schmierschicht zwischen 0.25 und 1.5 µm, besonders bevorzugt zwischen 0.5 und 1.0 µm.

Bevorzugter Weise wird für eine bestimmte Hochtemperaturapplikation (Temperatur, tribologischer Kontakt, Umgebungsatmosphäre und Dauer) ein passendes Paar aus Top-Schmierschicht und darunterliegendem Schichtsystem evaluiert.

Im Folgenden soll beispielweise das Zusammenspiel einer Mo-X-Y Top-Schmierschicht mit einem darunterliegenden Mehrlagenschichtsystem erläutert werden. Der Wirkungsmechanismus der Top-Schmierschicht in Kombination mit dem darunterliegenden Mehrlagenschichtsystem kann im Hinblick auf mechanische, strukturelle und chemische Stabilität bei diversen Hochtemperaturapplikationen vermutlich wie folgt beschrieben werden: Während die Top-Schmierschicht ausschliesslich im Initialstadium des tribologischen Kontakts zum Einsatz kommt, indem diese Schmierschicht bei erhöhten Temperaturen unter Bildung einer Festkörperschmierphase (v.a. Metalloxide) kontinuierlich aufgebraucht wird, und somit das tribologische Einlaufverhalten optimiert (d.h. also den initialen tribologischen Kontakt für den weiteren Verlauf optimal konditioniert), ist das darunterliegende Mehrlagenschichtsystem (nach erfolgter Oberflächenkonditionierung durch die Top-Schmierschicht) für eine langanhaltende und hochtemperaturstabile Aufrechterhaltung des (abrasiven und adhäsiven) Verschleissschutzes zuständig. Es ist anzunehmen, dass bei Temperaturen ab ca. 400°C die Oxidation der Top-Schmierschicht einsetzt (in Abhängigkeit von der genauen Mikrostruktur und Zusammensetzung). Die Oxidation der in der Top-Schmierschicht enthaltenden Metalle wie B, V, W, Zr, Cu, Ag und Mo kann zur Bildung von sogenannten "Magneli Phasen" führen. Es ist bekannt, dass solche Magneli Phasen exzellente Schmiereigenschaften (Festkörperschmierung) haben. Das darunter liegende Mehrlagenschichtsystem dagegen bietet durch seine Architektur in Abstimmung mit dem Schichtlagenchemismus nicht nur die erforderliche mechanische, strukturelle und chemische Hochtemperaturstabilität, sondern auch die wünschenswerte und im vorliegenden Fall kontrollierbare Bildung von Festkörperschmierphasen (v.a. Metalloxide; es kann zur Bildung von sogenannten "Magneli Phasen" kommen) im stabilen Langzeiteinsatz bei hohen Temperaturen bis zu 1000°C.

Das Mehrlagenschichtsystem umfasst zumindest eine hochtemperaturstabilisierte Schicht (HT-Schicht). Eine solche kann beispielsweise eine Zusammensetzung entsprechend (Mel, Me2, Mo)N. sein.

In einer besonders bevorzugten Ausführungsform der vorliegenden Erfindung enthält das Mehrlagenschichtsystem zumindest zwei Schichtpakete in welchen mit zunehmendem Abstand vom Substrat eine schmieraktive Schicht auf eine HT-Schicht folgt. Eine schmieraktive Schicht kann der HT-Schicht entsprechend, jedoch mit erhöhtem Molybdänanteil aufgebaut sein. Dementsprechend würden die molybdänarmen Schichten die HT-Schichten bilden während die molybdänreichen Schichten die schmieraktiven Schichten bilden können. Vorzugsweise liegt die maximale Molybdänkonzentration in den molybdänreichen Schichten bei mindestens 10 at.%, besonders bevorzugt mindestens 20 at.% über der minimalen Molybdänkonzentration der benachbarten molybdänarmen Schichten. Die molybdänreichen Schichten des Wechselschichtsystems können beispielsweise sowohl mittels PVD-Verfahren unter Verwendung von Einzelkomponenten Materialquellen (Targets) als auch mittels PVD-Verfahren unter Verwendung von Mehrkomponenten Materialquellen abgeschieden werden.

Die molybdänreichen Schichten des Wechselschichtsystems können, um die Schmierung weiter zu verbessern, ein oder mehrere weitere Elemente aus der Gruppe gebildet durch C, O, B, Si, V, W, Zr, Cu, und Ag enthalten.

Die molybdänarmen Schichten des Wechselschichtsystems können, um die Hochtemperaturstabilität weiter zu verbessern, z.B. durch Verbesserung der mechanischen und chemischen Eigenschaften, ein oder mehrere weitere Elemente und deren Mischungen aus der Gruppe gebildet durch B, Si, W und Zr enthalten.

Auf dieses Mehrlagenschichtsystem wird erfindungsgemäss eine Top-Schmierschicht wie oben angegeben angeordnet.

Erfindungsgemässe Substrate, d.h. mit dem erfindungsgemässen Beschichtungssystem beschichtete Substrate können überall dort mit Vorteil eingesetzt werden, wo es in der Anwendung zu hohen Temperaturen und zur tribologischen Beanspruchung kommt. Dies ist beispielsweise beim direkten Presshärten der Fall. Als Beispiele seien hier genannt:
∘ Direktes Presshärten von AlSi-beschichteten 22MnB5 USSH-Blechen
∘ Direktes Presshärten von unbeschichteten 22MnB5 USSH-Blechen
∘ Direktes Presshärten von ultrahochfesten Stählen vom Typ 22MnB5 die mit Zn basierten Schichten beschichtet sind.

Weitere Anwendungsbeispiele sind
∘ Schmieden von hochfesten Metallblechen
∘ Zerspanung und Verformung insbesondere von hochfesten Titan- und Nickellegierungen
∘ Bauteile und bewegliche Komponenten in Verbrennungsmotoren und im Turboladerbereich
∘ Aluminium- und Magnesiumdruckguss
∘ Spritzgiessen und Extrusion insbesondere von hochfesten Kunststoffen oder Aluminium.

Gemäss einem ersten Beispiel der vorliegenden Erfindung wird auf ein Presshärte-Formwerkzeug eine 2µm dicke (Ti_{0.5}Al_{0.5})N Schicht aufgebracht. Anschliessend folgen 5 Schichtpakete, wobei jedes Schichtpaket eine 0.5µm dicke (Ti_{0.3}Al_{0.3}Mo_{0.4})N Schicht enthält auf die eine 0.5µm dicke (Ti_{0.5}Al_{0.5})N Schicht folgt. Den Abschluss dieses Mehrlagenschichtsystems bildet eine 0.5µm dicke (Ti_{0.3}Al_{0.3}Mo_{0.4})N Schicht. Das Gesamtschichtsystem dagegen wird durch eine 0.5µm dicke Mo_{0,95}Si_{0.03}B_{0.02} als Top-Schmierschicht abgeschlossen. Als geeignete Top-Schmierschichten sind in diesem konkreten Fall sind auch MoN und Mo_{0.95}Cu_{0.05}N von besonderer Relevanz.

Gemäss einem zweiten Beispiel der vorliegenden Erfindung wird auf ein Presshärte-Formwerkzeug eine 2µm dicke (Al_{0.65}Cr_{0.25}Si_{0.05})N Schicht aufgebracht wobei Si optional auch weggelassen werden kann. Anschliessend folgen 5 Schichtpakete, wobei jedes Schichtpaket eine 0.5µm dicke (Al_{0.42}Cr_{0.18}Mo_{0.35}Cu_{0.05})N Schicht enthält auf die eine 0.5µm dicke (Al_{0.7}Cr_{0.3})N Schicht folgt. Den Abschluss dieses Mehrlangenschichtsystems bildet eine 0.5µm dicke (Al_{0.42}Cr_{0.18}Mo_{0.35}Cu_{0.05})N Schicht. Das Gesamtschichtsystem dagegen wird durch eine 0.5µm dicke MoN Schicht als Top-Schmierschicht abgeschlossen.

Bevorzugt ist ausserdem eine Beschichtung mit Mehrlagenschichtsystem umfassend Verbindungen (C und/oder N und/oder O) von Al und B und den Elementen der IV und V Nebengruppe einerseits und Mo-Verbindungen (C und/oder B und/oder N und/oder O) andererseits, und mit Top-Schmierschicht die eine Mo-Verbindung mit Mo als Hauptkomponente enthält und deren Dicke gleich gross, bevorzugt dicker als die der Mohaltigen Schichten im Multilayer ist.

Besonders bevorzugt ist die Beschichtung mit Mehrlagenschichtsystem wie oben, bei dem der integrale Anteil von Mo am Gesamtanteil der Metalle kleiner 50 at.% ist.

Weitere Versuche haben zu folgenden Merkmalen von besonders bevorzugten Ausführungsformen der vorliegenden Erfindung geführt:
- Die schmieraktiven Schichten (TiAlMoN) sollen vorteilhafter Weise einen (gemittelten; wenn gemessen mit EDX bei 10kV) Mo-Gehalt von 20-60 at.% haben, bevorzugt 25-35 at.%, besonders bevorzugt 30 at.% haben.
- Der (gemittelte) Mo-Gehalt kann auch über die Architektur (Nanolayer-Struktur) der schmieraktiven Schichten gesteuert werden (siehe Bilder unten). Unter Verwendung von 2 Target-Typen (Mo und TiAl) ist technisch so etwas über i) eine Änderung der Rotationsgeschwindigkeit und/oder über ii) eine Änderung der Target-Parameter aller gleichzeitig laufender Targets realisierbar.
- Die Dicke der MoN-reichen Schichten im TiAlMoN (hellen Schichten im Nanolayer) kann variieren zischen 10-60nm, bevorzugt zwischen 20-50nm, besonders bevorzugt zwischen 30-40nm. Die optimale Dicke der MoN-reichen Schichten im TiAlMoN scheint bei ca. 40nm zu liegen.
- Ein Mo-Gehalt von ca. 30 at.% in den schmieraktiven Schichten (TiAlMoN) kann bei Temperaturen von ca. 800-900°C sehr günstig die Oberflächenoxidation vorantreiben (ohne das Gesamtschichtgefüge nachteilig zu beeinflussen), so dass stets ausreichend (Oxid) Schmiermittel angeboten wird, um im Langzeiteinsatz ein Aufschmieren von AISi zu unterbinden. Die haben applikationsnahe Tests (z.B. HT-SRV-Test mit kontinuierlichem Wechsel des Usibor®-Blechs wobei stets die gleiche Schicht getestet wird) gezeigt.
- Sehr vorteilhaft ist auch die Tatsache, dass bei Variation des Mo-Gehalts im Bereich von 20-40 at.% in den schmieraktiven Schichten (TiAlMoN), die mechanischen Eigenschaften (Härte, E-Modul, Haftung), die strukturellen Eigenschaften (Phasenbestand) wie auch die Oxidationseigenschaften (Wachstum einer Oxidschischt bei 800°C für 1 h in Umgebungsatmoshpäre) der Gesamtschicht nicht signifikant verändert werden. Das ermöglicht gezielt die Architektur sowie die Zusammensetzung für diverse HT-Applikationen in Bezug auf Beständigkeit gegen Abrasiv- und Adhäsiv-Verschleiss zu optimieren.

Wie oben bereits dargestellt sind im Bereich des direkten Presshärtens von ultrahochfesten Stählen für Anwendungen im Automobil (z.B. B-Säule) Al-Si beschichtete Stahlbleche vom Typ 22MnB5 aktuell Stand der Technik. Al-Si Stahlbeschichtungen verhindern beim Austenitisieren (T > 900°C) in Umgebungsatmosphäre die Verzunderung (Eisenoxidbildung) der Stahloberfläche und bieten ausreichenden Korrosionsschutz (passiver Grenzschichteffekt) im Vergleich zu unbeschichteten Stahlblechen.

Um jedoch beim Presshärten den zunehmend wachsenden Anforderungen an den Korrosionsschutz gerecht zu werden, treten in jüngster Zeit zunehmend Zn-basierte Stahlbeschichtungen in den Fokus laufender Entwicklungen. Diese Zn-basierte Stahlbeschichtungen bieten zusätzlich zur Vermeidung vom Hochtemperaturverzundern einen sehr effektiven, kathodischen Korrosionsschutz (Zn ist unedler als Fe, sodass unter Korrosionsbedingungen im galvanischen Element Zn die Anode und Fe ist die Kathode darstellen - man spricht vom kathodischen Korrosionsschutz). Es gibt jedoch signifikante Probleme, die sich beim direkten Presshärten von z.B. Zn-basierte ultrahochfesten Stählen vom Typ 22MnB5 ergeben:
- Abrasiver Werkzeugverschleiss durch die Bildung von Zinkoxid
- Adhäsiver Werkzeugverschleiss durch die starke Anhaftung von Zinkoxid
- Rissbildung in der Zn-basierten Stahlbeschichtungen bis in das Stahlblech hinein beim direkten Presshärten in Folge hoher mechanischer Belastung beim Umformen

Insbesondere die Rissbildung ist ein zentrales Problem. Die Frage stellt sich nun, ob die Rissbildung beim direkten Presshärten verhindert werden kann, wenn die Grenzflächentribologie zwischen Werkzeug- und Stahlblechoberfläche optimiert, d.h. wenn die Grenzflächenreibung reduziert wird. Das Ziel ist es somit eine Werkzeugbeschichtung anzubieten, die in der Lage ist zum einen den Werkzeugverschleiss und zum anderen den Reibwert signifikant zu reduzieren.

Vor dem oben dargestellten Hintergrund wurden weitere Versuche mit Zn-basierten Stahlbeschichtungen gemacht. Hierzu wurden anwendungsnahe tribologische Tests bei hohen Temperaturen (z.B. HT-SRV Tests) gemacht, um Aussagen zum Schichtverschleiss und zum Reibwert zu bekommen. Nach Auslagerung der Zn-beschichten Stahlbleche bei ca. 880°C für 10min wurde die Temperatur auf 700°C abgesenkt und der beschichtete SRV-Prüfkörper (mit der zu untersuchenden Beschichtung) wurde mit einer Last von 10N auf die heisse Stahloberfläche gebracht. Anschliessend wurde der tribologische Test im oszillierenden Modus für 2.5 min durchgeführt. Der Reibwert wurde direkt gemessen und die Verschleissspur wurde mittels Rasterelektronenmikroskop und Kalottenschliff auf adhäsiven und abrasiven Verschleiss untersucht. Der adhäsive Verschleiss wurde subjektiv klassifiziert (1 = keine Materialaufschmierung bis 5 = signifikante Materialaufschmierung) und der abrasive Verschleiss wurde absolut in % normiert auf eine Schichtdicke von 8 µm ermittelt. Das erfindungsgemässe Beschichtungssystem wurde in 2 Varianten gegen die Benchmark-Beschichtungen Eisennitrid (nitrierte Stahloberfläche mit Verbindungsschicht) und AlCrN getestet.

Beschreibung der Variante 1 (Typ 1): (Mo_{0.95}Cu_{0.05})N als Topschicht mit einer Schichtdicke von ca. 0.5 µm auf einem Mehrlagenschichtsystem, das wie folgt aufgebaut ist: auf eine 2µm dicke (Ti_{0.5}Al_{0.5})N Schicht folgen 5 Schichtpakete, wobei jedes Schichtpaket eine 0.5µm dicke (Ti_{0.3}Al_{0.3}Mo_{0.4})N Schicht enthält auf die eine 0.5µm dicke (Ti_{0.5}Al_{0.5})N Schicht folgt. Den Abschluss dieses Mehrlagenschichtsystems bildet eine 0.5µm dicke (Ti_{0.3}Al_{0.3}Mo_{0.4})N Schicht.

Beschreibung der Variante 2 (Typ II): MoN als Topschicht mit einer Schichtdicke von ca. 0.5 µm auf einem Mehrlagenschichtsystem, das wie folgt aufgebaut ist; auf eine 2µm dicke (Ti_{0.5}Al_{0.5})N Schicht folgen 5 Schichtpakete, wobei jedes Schichtpaket eine 0.5µm dicke (Ti_{0.3}Al_{0.3}Mo_{0.4})N Schicht enthält auf die eine 0.5µm dicke (Ti_{0.5}Al_{0.5})N Schicht folgt. Den Abschluss dieses Mehrlagenschichtsystems bildet eine 0.5µm dicke (Ti_{0.3}Al_{0.3}Mo_{0.4})N Schicht.

Wie in den unten dargelegten Ergebnissen zu sehen ist, zeigen beide Varianten des erfindungsgemässen Beschichtungssystems einen sehr geringen Adhäsiv-Verschleiss sowie einen signifikant reduzierten Reibwert im Vergleich zu den Benchmark-Beschichtungen.

Nach dem 2.5min-Test ist nur beim Eisennitrid ein gewisser Abrasiv-Verschleiss zu erkennen. Sehr überraschend ist auch die Tatsache, dass die Variante 2 des erfindungsgemässen Beschichtungssystems nach 10 aufeinander gefolgten 2.5min-Tests eine unverändert überlegende Performance zeigt. Diese Ergebnisse zeigen eindeutig, dass das erfindungsgemässe Beschichtungssystem auch für den industriellen Langzeiteinsatz sehr grosses Potential hat.

## Patentansprüche

1. Beschichtung mit einem Mehrlagenschichtsystem wobei das Mehrlagenschichtsystem zumindest eine hochtemperaturstabilisierte HT-Schicht enthält und eine Top-Schmierschicht mit der Zusammensetzung gemäss Moₐ-X_{b}-Y_{c} besitzt wobei a, b und c die atomare Konzentration der jeweiligen Bestandteile angibt und a+b+c=1 gilt und 0<=b<a und 0<=c<a gilt, wobei X als Metall-Bestandteil ein Element aus der Gruppe gebildet durch B, Si,V, W, Zr, Cu und Ag oder eine Kombination daraus ist und Y als Nichtmetall-Bestandteil ein Element aus der Gruppe gebildet durch C, O und N oder eine Kombination daraus ist, **dadurch gekennzeichnet, dass** die Top-Schmierschicht die Zusammensetzung Mo-Si-B und/oder Mo-Si-B-N, oder Mo-Si-B-O-N, oder MoN und/oder Mo-Cu-N hat, wobei die maximale Molybdänkonzentration in der molybdänreicheren schmieraktiven Top-Schmierschicht bei mindestens 10 at.% über der minimalen Molybdänkonzentration der benachbarten molybdänarmen HT-Schicht liegt.

2. Beschichtung nach Anspruch 1, **dadurch gekennzeichnet, dass** die Architektur der Topschmierschicht einen Monolayer oder einen Bilayer oder einen Multilayer oder einen nanolaminierten Aufbau aufweist, wobei im Falle des Bilayers, des Multilayers oder des nanolaminierten Aufbaus durch den Aufbau die Mikrostruktur oder der Chemismus verändert wird.

3. Beschichtung nach Anspruch 2, **dadurch gekennzeichnet, dass** die Architektur der Topschmierschicht einen Bilayer oder einen Multilayer oder einen nanolaminierten Aufbau aufweist und durch den Aufbau die Mikrostruktur verändert wird.

4. Beschichtung nach Anspruch 2, **dadurch gekennzeichnet, dass** die Architektur der Topschmierschicht einen Bilayer oder einen Multilayer oder einen nanolaminierten Aufbau aufweist und durch den Aufbau der Chemismus verändert wird.

5. Beschichtung nach einem der vorangehenden Ansprüche, **dadurch gekennzeichnet, dass** die Top-Schmierschicht mindestens 95 at% Molybdän enthält.

6. Beschichtung nach einem der vorangehenden Ansprüche, **dadurch gekennzeichnet, dass** die Schichtdicke der Top-Schmierschicht zwischen 0.25 µm und 1.5 µm beträgt.

7. Substrat beschichtet mit einer Beschichtung nach einem der vorangehenden Ansprüche 1 bis 6, wobei das Substrat ein Bauteil, eine Komponente oder ein Werkzeug ist.

8. Beschichtetes Substrat nach Anspruch 7, **dadurch gekennzeichnet, dass** das Substrat ein Werkzeug ist.

9. Beschichtetes Werkzeug nach Anspruch 8, **dadurch gekennzeichnet, dass** das Werkzeug ein Werkzeug zum direkten Presshärten ist.

10. Verwendung eines Werkzeugs nach Anspruch 9 zum direkten Presshärten von:
• AlSi-beschichteten 22MnB5 USSH-Blechen, oder
• unbeschichteten 22MnB5 USSH-Blechen, oder
• ultrahochfesten Stählen vom Typ 22MnB5, die mit Zn basierten Schichten beschichtet sind.

## Claims

1. Coating with a multilayer coating system whereby the multilayer coating system comprises at least one high temperature stabilized HT-layer and a top smear layer which has a composition according to Moₐ-X_{b}-Y_{c}, whereby a, b and c indicate the atomic concentration of the respective components, and the following is valid: a+b+c=1, and 0≤b<a and 0≤c<a, whereby X is a metal component out of the group consisting of B, Si, V, W, Zr, Cu and Ag or a combination thereof, and Y is a non-metallic component out of the group consisting of C, O and N or a combination thereof, **characterized in that** the top smear layer has a composition Mo-Si-B and/or Mo-Si-B-N, or Mo-Si-B-O-N, or MoN and/or Mo-Cu-N, whereby the maximum concentration of molybdenum within the molybdenum-rich actively lubricating top smear layer is at least 10% higher than the minimum concentration of molybdenum of the molybdenum-lacking neighboring HT-layer.

2. Coating according to claim 1, **characterized in that** the design of the top smear layer comprises a monolayer, or a bilayer, or a multilayer, or a nanolayer structure, whereby in the case of the bilayer, the multilayer, or the nanolayered structure, the structure is modified by the microstructure or the chemical composition.

3. Coating according to claim 2, **characterized in that** the design of the top smear layer comprises a bilayer, or a multilayer or a nanolayered structure, whereby the structure is modified by the microstructure.

4. Coating according to claim 2, **characterized in that** the design of the top smear layer comprises a bilayer, or a multilayer or a nanolayered structure, whereby the structure is modified by the chemical composition.

5. Coating according to one of the previous claims, **characterized in that** the top smear layer comprises at least 95 at% of molybdenum.

6. Coating according to one of the previous claims, **characterized in that** the layer thickness of the top smear layer is between 0.25 µm and 1.5 µm.

7. Substrate coated with a coating according to one of the previous claims 1 to 6, whereby the substrate is a structural element, a component, or a tool.

8. Coated substrate according to claim 7, **characterized in that** the substrate is a tool.

9. Coated substrate according to claim 8, **characterized in that** the tool is a tool for direct press hardening.

10. Use of a coated tool according to claim 9 for direct press hardening of:
- AlSi-coated 22MnB5 USSH-plates, or
- uncoated 22MnB5 USSH-plates, or
- ultra-high-tensile steels of the 22MnB5 type, which are coated with Zn-based coatings.

## Revendications

1. Revêtement comprenant un système multicouches, le système multicouches contenant au moins une couche HT stabilisée à haute température et possédant une couche supérieure lubrifiante à la composition suivante Moₐ-X_{b}-Y_{c}, a, b et c indiquant la concentration atomique des différents composants et dans lequel on applique a+b+c=1 et 0<=b<a et 0<=c<a, dans lequel X en tant que composant métallique est un élément issu du groupe constitué de B, Si, V, W, Zr, Cu et Ag ou une combinaison de ces derniers, et Y en tant qu'élément non métallique est un élément issu du groupe constitué de C, O et N ou une combinaison de ces derniers, **caractérisé en ce que** la couche supérieure lubrifiante a la composition suivante Mo-Si-B et/ou Mo-Si-B-N, ou Mo-Si-B-O-N, ou MoN et/ou Mo-Cu-N, la concentration maximale en molybdène dans la couche supérieure lubrifiante riche en molybdène étant au moins 10 % d'atomes supérieure à la concentration minimale en molybdène de la couche HT adjacente pauvre en molybdène.

2. Revêtement selon la revendication 1, **caractérisé en ce que** l'architecture de la couche supérieure lubrifiante présente une monocouche ou une bicouche ou une multicouches ou une structure nanolaminée, dans lequel, dans le cas de la bicouche, de la multicouches ou de la structure nanolaminée, la structure modifie la microstructure ou la composition chimique.

3. Revêtement selon la revendication 2, **caractérisé en ce que** l'architecture de la couche supérieure lubrifiante présente une bicouche ou une multicouches ou une structure nanolaminée, et **en ce que** la structure modifie la microstructure.

4. Revêtement selon la revendication 2, **caractérisé en ce que** l'architecture de la couche supérieure lubrifiante présente une bicouche ou une multicouches ou une structure nanolaminée et **en ce que** la structure modifie la composition chimique.

5. Revêtement selon l'une des revendications précédentes, **caractérisé en ce que** la couche supérieure lubrifiante contient au moins 95 % d'atomes de molybdène.

6. Revêtement selon l'une des revendications précédentes, **caractérisé en ce que** l'épaisseur de couche de la couche supérieure lubrifiante est comprise entre 0,25 µm et 1,5 µm.

7. Substrat recouvert d'un revêtement selon l'une des revendications 1 à 6, le substrat étant un élément, un composant ou un outil.

8. Substrat recouvert selon la revendication 7, **caractérisé en ce que** le substrat est un outil.

9. Outil recouvert selon la revendication 8, **caractérisé en ce que** l'outil est un outil pour la trempe sous presse directe.

10. Utilisation d'un outil selon la revendication 9 pour la trempe sous presse directe de :
- tôles USSH 22MnB5 recouvertes de AISi, ou
- tôles USSH 22MnB5 non recouvertes, ou
- aciers ultrarésistants de type 22MnB5 recouverts de couches à base de Zn.
